Europäisches Patentamt

(19) European Patent Office

Office européen des brevets

(11) Publication number: **0 126 827**
A1

(12) # EUROPEAN PATENT APPLICATION

(21) Application number: **83402161.0**

(22) Date of filing: **08.11.83**

(51) Int. Cl.³: **A 01 N 25/10**
**A 01 N 25/34**

(30) Priority: **02.05.83 US 490544**

(43) Date of publication of application:
**05.12.84 Bulletin 84/49**

(84) Designated Contracting States:
**AT BE CH DE FR GB IT LI LU NL SE**

(71) Applicant: **THE STOLLE RESEARCH AND
DEVELOPMENT CORPORATION**
**6990 Cornell Road**
**Cincinnati Ohio 45242(US)**

(72) Inventor: **Lewis, Danny H.**
**312 Jackson Circle**
**Gardendale Alabama 35071(US)**

(72) Inventor: **Dunn, Richard L.**
**3412 Sagewood Trail**
**Birmingham Alabama 35243(US)**

(74) Representative: **Ores, Irène et al,**
**CABINET ORES 6, Avenue de Messine**
**F-75008 Paris(FR)**

(54) Controlled release aquatic biologically active agent formulations.

(57) A controlled release, biologically active agent containing composition for use in an aquatic environment, comprising strands of polymeric fiber containing a biologically effective amount of a biologically active agent which is effective for the treatment of plants in an aquatic environment.

EP 0 126 827 A1

-1-

## Description

## Controlled Release Aquatic Biologically
## Active Agent Formulations

The Government has rights in this invention pursuant to Contract Number DACW 39-78-C-0070 awarded by the Corps of Engineers, Department of the Army.

## Technical Field

The present invention relates to formulations containing a biologically active agent which is useful in the treatment of aquatic vegetation. More particularly, the present invention relates to a controlled release formulation which delivers a herbicide, pesticide or fungicide to plants in an aquatic environment.

## Background Art

Aquatic plants and in particular, aquatic weeds are of a substantial economic and health burden in many areas of the country. Such plants present a hazard to navigation, reduce or prevent the use of recreational facilities, serve as a habitat for harmful insects, destroy fish life, retard water flow in drainage channels and are also aesthetically unappealing. The annual losses which result from aquatic-weed infestations in the United States are estimated to be in excess of 100 million dollars.

Four general techniques are used to control the growth of aquatic plants with the methods being used individually or in combinations. The most important technique is the application of chemical herbicides. Another technique is water management which is effective against certain weeds. However, this technique can be employed only under certain circumstances, and does not generally do a complete job of water control. A third technique is mechanical control which is used in combination with chemical control. However, this method is limited in its applicability and is not usually economically feasible. A further area is biological control which is a relatively new concept and which is experiencing rapid progress. However, the technology is still in its infancy.

In the past, advances in chemical methodology has centered on the development of ever more potent chemical agents. However, disappointing results have often been obtained when trying to practically use the chemical agents to produce the desired biological response, primarily because of the difficulties encountered in delivering the chemical agents to their targets at the precise time and in the optimum quantities required.

A controlled-release formulation or delivery system is defined as a combination of a biologically active agent and an excipient, which is usually a polymer which delivers the biologically active agent to a target where the agent is released at a controlled rate over a specified period. The chief advantage of controlled release formulations is that they permit a much less biologically active agent to be used over a given period of reactivity than would have to be administered in only one or several applications of the agent. Controlled release formulations have a marked advantage when potent biologically active agents are applied which have a normal short half-life, since the long acting, controlled release formulations will gradually release the agent thereby eliminating the frequent applications required for the short half-life agents.

N.F. Cardarelli in Controlled Release Pesticide Formulations, CRC Press, Cleveland Ohio, 1976, page 125-132 discloses controlled release pesticide formulations in which various pesticidal agents have been incorporated in polymeric carriers. An example is the incorporation of certain organotin compounds in elastomeric formulations based on the likes of chloroprene. The reference also mentions the controlled release of copper sulfate as an antifouling agent from encapsulated microporous polymer. However, the reference does not disclose the preparation of biologically active agent laden polymeric fibers, nor the use of such fibers as a means of providing effective delivery of a biologically active agent to an aquatic environment.

The concept and practice of controlled release encompasses many mechanisms. The earliest such formulations were based on the desorption of active agents from strong sorbents such as silica gel, mica and activated charcoal. However, most of the current systems are based on more controllable mechanisms such as diffusion through rate-controlling media, the erosion of biodegradable barrier materials and retrograde chemical reactions. The designers of controlled-release formulations or devices usually attempt to achieve zero-order (constant) rates of release. However, systems which exhibit time dependent release kinetics are proving to be useful for pesticide release, especially when the rate and duration of release are predictable and well controlled. In practice, the rate of biologically active agent release may be controlled by several sequential or simultaneously cooperating mechanisms which do not lend themselves to simple analysis. However, despite the difficulty, it is nevertheless possible to experimentally determine an overall "apparent" order of release for these complex systems.

Of the many design concepts which have been investigated for the development of controlled release formulations for biologically active agents, the two most promising ones are the following: (1) a heterogeneous dispersion of particles or droplets of the biologically active agent in a solid polymeric matrix, which can be either biodegradable or non-biodegradable and which controls the release of agent by diffusion through the matrix, by erosion of the matrix, or by a combination of both diffusion and erosion; and (2) chemical bonding of a biologically active agent to a natural or synthetic polymeric material, as by pendant anhydride or ester linkages, or formulation of macromolecules of active agent via ionic or covalent linkages which control the release of the active agents by hydrolysis, thermodynamic dissociation, microbial degradation or by some other retrograde chemical reaction of the linkages. A third concept of controlled release formulations involves the preparation of capsules made of polymeric material filled with a solid or liquid biologically active agent or with a suspension or solution of the agent in a fluid, in which the release of active agent is controlled by Fickian diffusion through the capsule walls or through micropores in the capsule walls. However, none of the above techniques have shown thus far any adaptability for the aquatic environment. A need, therefore, continues to exist for a technique by which biologically active agents can be administrated effectively by controlled release in an aquatic environment.

## Disclosure of Invention

Accordingly, one object of the present invention is to provide a controlled release formulation for the application of biologically active agents in an aquatic environment.

Another object of the present invention is to provide a method by which aquatic plants can be effectively treated with a biologically active agent such as a herbicide, fungicide or pesticide.

Briefly, these objects and other objects of the present invention as hereinafter will become more readily apparent can be attained by a controlled release, biologically active agent containing composition for use in an aquatic environment which comprises strands of polymeric fibers containing a biologically effective amount of a biologically active agent which is effective for the treatment of plants in an aquatic environment.

## Brief Description of the Drawings

A more complete appreciation of the invention and many of the attendant advantages thereof will be readily obtained as the same becomes better understood by reference to the following detailed description when considered in connection with the accompanying drawings wherein:

FIGURES 1 and 2 are graphs showing the cumulative fractional release of fluridone laden polycaprolactone fibers of varying concentrations into 50:50 ethanol:water and hard water respectively versus time in days;

FIGURE 3 is a graph of the cumulative release of fluridone laden polycaprolactone fibers of concentrations ranging from 10% to 60% into hard water versus time in days;

FIGURE 4 is a graph of the amount of fluridone released from fluridone laden polycaprolactone fibers of concentrations ranging from 10% to 60% into hard water per day;

FIGURES 5 and 6 contrast the cumulative release and cumulative fractional release profiles of 60% laden fluridone polycaprolactone fibers into hard water for herbicide laden fibers which are coated with a coating of herbicide free polycaprolactone versus uncoated herbicide laden fiber; and

FIGURES 7 and 8 show graphs which correspond to those of FIGURES 5 and 6 except that the data were obtained with 10% fluridone laden fibers.

Best Mode for Carrying Out the Invention

The essence of the present invention is the provision of a controlled release polymeric formulation which is capable of providing a sustained application of a biologically active agent in an aquatic environment. The invention is based on the concept of active agent containing polymeric fibers which, when distributed in an aquatic environment, are spread with the flow of water and, as the fibers float and/or sink in the water, become entangled in the plants. While entangled in the plants, active agent is continually released from the fibers by diffusion therefrom and/or as the fiber materials degrade, erode or deteriorate. The entanglement of the active agent laden fibers in the plants has the advantage that the system of application does not become buried in the mud as other applied slow release systems, and accordingly, the bound active agent is released continually in the immediate environs of the treated aquatic plants.

In the physical combination of the biologically active agent and polymer, there are two types of release from the polymeric matrix which are possible. Concerning the first type of release, a polymeric fiber which is spun containing active agent dissolved or dispersed in the matrix, will normally exhibit first order release kinetics. When the active agent laden fibers are placed in an aquatic environment, the rate of release will be proportional to the amount of active agent remaining in the fiber. Initially the rate of release of active agent occurs in large amounts, but with time, successively smaller amounts of active agent diffuse from the fiber. This form of active agent release may be particularly advantageous where larger amounts of the active agent are necessary for initial plant treatment, and smaller residual amounts are necessary to continue the treatment of the plants.

The biologically active agent containing polymeric fibers of this first embodiment exhibit release profiles in which an inverse relationship of active agent loading to fractional release rate is described mathematically by Fick's law in the following form for devices of cylindrical geometry.

$$\frac{dM_t/M_\infty}{dt} = \frac{-4D \quad Cs}{r_o^2 \; C_o \; \ln(1-M_t/M_\infty)}$$

wherein $\frac{dM_t/M_\infty}{dt}$ is the fractional rate of release of active agent, D is the diffusion coefficient of the active agent in the polymer, $Cm^2/S$, $C_s$ is the saturation solubility, $g/cm^3$, $r_o$ is the radius of the cylinder, $C_o$ is the active agent loading, $g/cm^3$ and $M_t/M_\infty$ is the fraction of initial mass released at time t.

Alternatively, in the second embodiment of biologically active agent release, if an active agent is enclosed within an inert membrane, and if the thermodynamic activity of the active agent is maintained constant within the reservoir, then a steady state will be established during which the release rate will be constant (zero-order). The release rate of a reservoir device is determined by the membrane permeability and the device configuration. For a cylinder (a cylinder qualifies as a model for a fiber), the appropriate form of Fick's Law which describes steady-state release is:

$$\frac{dM}{dt} = \frac{2\pi h D K (C_s - C_f)}{\ln(r_o/r_i)}$$

wherein dM/dt is the rate of release of active agent, h is the length of fiber, D is the diffusion coefficient of active agent in the polymeric coating, $C_s$ is the

saturation solubility of active agent in the coating, $C_f$ is the concentration of active agent in the receiving fluid (water), K is the partition coefficient of active agent between the polymeric coating and water, $r_o$ is the radius of fiber (core + membrane) and $r_i$ is the radius of the core only.

The biologically active agents which are used in the manufacture of the polymeric fibers of the present invention are those which are effective in treating plants which grow in an aquatic environment. Accordingly, the biologically active agents include herbicides which are effective in controlling the growth of aquatic plants, pesticides which are effective against underwater pests which infest aquatic plants and fungicides which are effective in treating fungal infections of aquatic plants. Suitable herbicides which can be used in the present invention include all herbicides which are useful for the control of aquatic plants. Representative examples of undesirable aquatic plants whose growth is desired to be controlled include water hyacinth, water lettuce, alligator weed, Hydrilla, Eurasian watermilfoil, Southern naiad, Bladderwort, Coontail, Pond weed, Duckweed, Edelgrass and the like. Suitable herbicides include 6,7-dihydrodipyrido-(1,2-a:2',1'-c]pyrazidiinium dibromide (Diquat), 1-methyl-3-phenyl-5[3-trifluoromethylphenyl]-4(1H)-pyridine(Fluridone), 2,6-dichlorobenzonitrile(Dichlobenil), 2,4-dichlorophenoxyacetic acid(2,4-D), 7-oxabicyclo[2,2,1]heptane-2,3-dicarboxylic acid (Endothall), the dimethylamine salt of 2,4-dichlorophenoxy acetic acid (2,4 D-DMA), the butoxyethanol ester of 2,4-dichlorophenoxy acetic acid or butoxyethyl (2,4-dichlorophenoxy) acetate (2,4 D-BEE), 2,3,6-trichlorophenyl acetic acid (Fenac), and the like. Fluridone is especially known as an effective herbicide for controlling the growth of aquatic plants as reported in a technical report by Lilly Research Laboratories.

Suitable fungicides which may be used in the present invention include all those which combat fungal infections in aquatic environments such as 5-methyl-1,2,4-triazolo(3,4-b(benzothiazole)) (Tricyclazole). This compound is well known for its effectiveness in treating fungal infections of rice plants as reported in a Technical Report by Lilly Research Laboratories.

Suitable pesticides which may be utilized in the present invention include all those which combat pest infestation in aquatic environments such as 0,0,0',0'-tetramethyl-0,0'thiodi-p-phenylene phosphorothioate (Abate), 0,0-diethyl-0-3,5,6-trichloro-2-pyridyl-phosphorothioate (Dursban), 0,0-dimethyl dithiophosphate of diethyl mercaptosuccinate (Malathion), 2,2-dichlorovinyl dimethylphosphate (Dichlorvos), 0,0-dimethyl-0-[4-(methylthio)-m-tolyl] phosphorothioate (Baytex), Pyrethins, hexachloroepoxy-octahydro-endo, exo-dimethanonaphthalene (Dieldrin), hexachloroepoxy-octahydro-endo, endo-dimethanonaphthalene (Endrin), and the like. The fungicidal and pesticidal compositions of the invention are utilized to treat aquatic plants of beneficial value such as aquatic food plants, of which rice is an example, in order to promote abundant growth of the same.

The polymer which is useful as the matrix material in which the biologically active agent is entrapped is any polymer which is compatible, i.e. not reactive with the biologically active agent, and capable of delivering the active agent to aquatic plants and which will permit continuous active agent release in an aquatic environment. In some areas of application an additional, important characteristic of the polymer is that it be biodegradable and biocompatible meaning that the polymer itself is consumed by local chemical reactivity, although it is not mandatory for all applications that the polymer be biodegradable, and does not adversely affect the ecology of the environment in which it is applied. Such polymers as polyglycolic acid and polylactic acid are desirable from the biodegradability standpoint. More generally, polymers such as polycaprolactone, cellulose acetate, hydroxypropyl cellulose, chitin, sodium alginate, polyhydroxybutyrate, polypivalolactone, and the like are satisfactory matrix materials.

Synthetic thermoplastic resins can also be employed as a polymer substrate, although most thermosetting resins can not be used because they cannot be extruded into fibers. Some thermosetting resins can be extruded into fibers, and therefore it is possible to use some thermosetting polymers in the preparation of the present biologically active agent laden fibers.

The biologically active agent bearing polymeric fiber material of the present invention can be prepared in any desired manner, including standard techniques such as melt-, wet-, dry- and gap fiber spinning methods. In a preferred embodiment, a biologically active agent in the desired quantity is mixed with a polymer such as pelleted or powdered polycaprolactone, and the mixture is extruded when heated above the melting point of the polymer into the shape of the factor. The biologically active agent under these conditions does not have to be soluble in the molten polymer but may be simply dispersed throughout the molten polymer. Conventional extrusion apparatus may be employed to prepare the active agent containing polymeric fibers.

In another method of preparing polymeric fibers containing biologically active agent, the polymeric fiber may be extruded as a hollow fiber. The fiber is then filled with an active agent or active agent formulation in its inner core. Conventional methodology and apparatus are available for the preparation of such fibers.

There is no criticality concerning the extent to which the polymeric material is loaded with a given biologically active agent or active agent formulation. Normally, the fibers are loaded with from 5 to 90 wt% of biologically active agent. A preferred weight ratio of biologically active agent to polymer ranges from 5:95 to 90:10, preferably, 10:90 to 60:40. Factors which usually affect the maximum amount of active agent which can be loaded in a given polymer include the fact that the polymer should not be loaded with active agent to such an extent that a physically unstable fiber is formed or that the fiber is mechanically weak, and the fact that the concentration should not be that high that the active agent forms as large sized aggregates in the polymeric matrix. On the opposite end of the scale, the amount of active agent present in the fiber should be such that the fibers once applied release quantities of active agent over reasonable periods of application.

It has been found that at least some biologically active agent laden fibers, when placed in a aqueous fiber, exhibit a sudden, initially high rate of release which dissipates, and thereafter exhibits a near zero-order rate of release of active agent. The rate of release, of course, is dependent on the fiber loading with the higher loading levels exhibiting a greater initial release of active agent. It has been found that the initial, suddenly high rate of release can be greatly reduced if desired, such that the fibers exhibit a near zero-rate of release over their effective lifetimes by coating, during the initial spinning process or in a subsequent step, the active agent laden fibers with a coating of active agent free polymer. In addition, such polymer coated fibers should exhibit even slower rates of release of biologically active agent as they sink to the bottom of the water body and become entangled in the plants.

The biologically active agent laden fibers of the present invention can be used in just about any type of aquatic environment from essentially stagnant bodies of water to flowing bodies of water such as rivers, streams and canals. In fact, the use of the fibers in the control of growth of aquatic plants in flowing bodies of water is a preferred embodiment of the invention. On the other hand, the treatment of rice plants in paddy fields with a fungicidal agent laden fiber mass is a preferred embodiment of the invention which relates to the treatment of plants in a relatively stagnant body of water.

The amount of biologically active agent applied to a given body of water is that amount which is required to control the growth of undesirable aquatic plants or to control pest or fungal infestations of valuable aquatic environments. Normally, however, the amount of the biologically active agent applied ranges from about 0.1 to 10.0 pounds per acre.

Having generally described this invention, a further understanding can be obtained by reference to certain specific examples which are provided herein for purpose of illustration only and are not intended to be limiting unless otherwise specified.

Example 1

Fluridone Studies

The fluridone used in this study is identified as Sample X-36950, 97% pure material supplied by Eli Lilly and Co. The polycaprolactone employed was PCL700 manufactured by Union Carbide Corp. Fiber blends containing fluridone were melt-spun on a melt indexer manufactured by the F. F. Slocomb Corp., Wilmington, Delaware.

Preparation of Fluridone-PCL Fibers

A number of blends of fluridone in polycaprolactone (PCL) were prepared in which the PCL to fluridone weight-to-weight ratios varied as follows: 40:60, 50:50, 60:40, 70:30, 80:20 and 90:10. In a given preparation 15g of total solids was dissolved in 75 g of $CH_2Cl_2$ with the desired quantity of fluridone being first dissolved in a glass bottle followed by dissolution of the desired quantity of polycaprolactone. The solution in a bottle was placed on a ball mill and then rotated for about 2 hours at room temperature to complete the blending of ingredients. Thereafter, all of the solvent was removed in a vacuum oven overnight at room temperature. The blended material obtained was then cut into strips about 0.25 by 2 in and stored in a desiccator containing Drierite until they were to be spun into fibers.

In the spinning of fibers about 5g of the dried fluridone containing polymer was changed into the melt indexer, which had been preheated to a temperature of 120°C. A weight of 2144g was applied to the ram of the device, while a rubber stopper was placed against the spinneret orifice to prevent flow of polymer. The sample was heated for about 20 min to melt the blended material and to reach equilibrium temperature. The stopper was then removed and the spinning of fibers was commenced with additional weights being added to the ram as needed to maintain the desired spinning rates.

The extruded fibers were cooled in ambient air and collected in a Teflon-lined pan positioned about 15 inches below the spinneret. The fibers were then transferred to polyethylene bags, where they were stored until evaluated. The sample identifying numbers and ram weights employed in the spinning of each blend are shown in Table 1 as follows.

## Table 1

| Sample No. A293- | PCL:fluridone ratio | Ram Weight,% |
|---|---|---|
| 41-1 | 40:60 | 12,200 |
| 33-1 | 50:50 | 7,084 |
| 35-1 | 60:40 | 2,144 |
| 35-2 and -3 | 60:40 | 4,945 |
| 37-1-5 and 51-1 | 70:30 | 2,144 |
| 49-1 | 80:20 | 4,945 |
| 53-1 | 80:20 | 2,144 |
| 47-1 | 90:10 | 2,144 |

Release Studies of Fluridone-PCL Fibers

The in vitro release of fluridone from PCL fibers having a range of fluridone loading prepared by the above described technique was determined by immersing triplicate samples of each fiber formulation in separate containers of 25-ml aliquots of 50% by weight aqueous alcohol. The sealed containers were agitated on an Eberbach shaker at 22°C. The receiving fluid was changed periodically and assayed for fluridone by measuring the absorption peak at 237 nm on a Perkin-Elmer 575 spectrophotometer. The quantity of fluridone released was determined from the Beer's Law plot of absorbance versus fluridone concentration.

(Fifty percent aqueous ethanol was selected as the receiving fluid because of the excellent solubility of fluridone in this particular solvent. A calibration curve was established by taking absorption determinations on various solutions of known fluridone concentrations.)

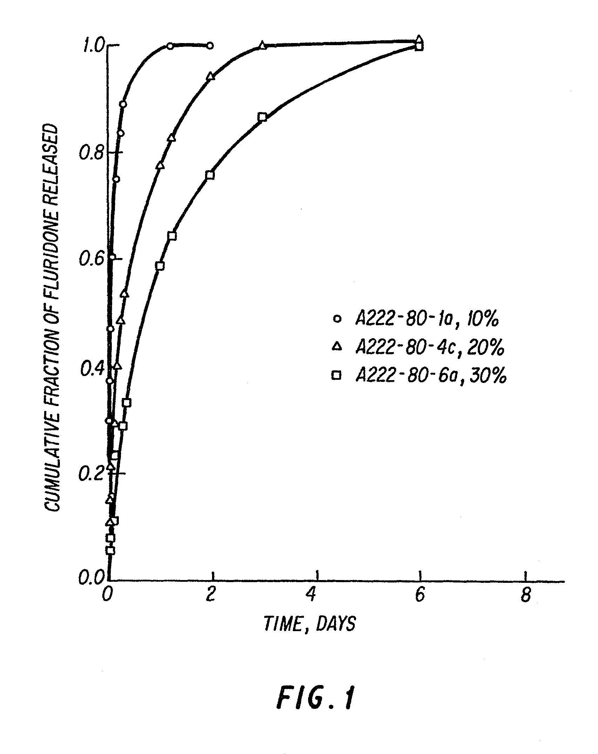

The release characteristics of fluridone from PCL were determined from PCL fibers containing 10%, 20% and 30% loadings. The cumulative fraction of the total herbicide released from each fiber sample into a 50:50 ethanol-water solution was plotted versus time in days. These release profiles are shown in FIGURE 1, and they indicate that the cumulative fractional release of fluridone is inversely proportional to the initial herbicide loading. This pattern suggests that if the concentration of fluridone is increased in the fiber, a slower fractional rate of release will result meaning further that a longer period of release will be realized. If a first order delivery system is desired, the results obtained are meaningful in designing a long-term delivery system for fluridone.

Using Fick's Law expression above for the release of herbicide from polymeric fiber in which the herbicide is diffused or dissolved in the polymeric material, the following expression can be derived:

$$\left(\frac{C_o r_o}{4}\right)\left([1-M_t/M_\infty][\ln(1-M_t/M_\infty)]+M_t/M_\infty\right) = D \bullet C_s \bullet t$$

When a plot of the entire term on the left side of the equation versus time in seconds was done for each fluridone laden fiber, the following results were obtained for the slope: $D \bullet C_s$ given by from the straight line plots. The results are shown in Table 2.

<div align="center">Table 2</div>

| Herbicide loading | $D \bullet C_s$, g cm$^{-1}$s$^{-1}$ |
| --- | --- |
| 10 | $2.56 \times 10^{-10}$ |
| 20 | $1.55 \times 10^{-10}$ |
| 30 | $1.98 \times 10^{-10}$ |

The results shown in the table above are fairly close in value with an average of $2.03 \times 10^{-10} g \; cm^{-1} s^{-1}$. The results obtained are those predicted from systems in which release of agent is controlled by diffusion.

## Release of Fluridone From Fibers Into Hard Water.

The release of fluridone from PCL fibers into hardwater was studied in tests in which water solutions were prepared of varying degrees of hardness. This study, of course, represents a real world situation since, in practical use, there are no natural aqueous systems containing 50% ethanol to which the present biologically active agent containing delivery system could be applied. Hardwater solutions were prepared by adding appropriate amounts of $NaHCO_3$, $MgSO_4$, $CaSO_4$ and KCl to deionized water. The amounts of these salts added depended on the hardness required. For test purposes, a hardness was selected of 160 to 180 mg of $CaCO_3$ per liter of water.

In like manner to the ethanolic solution tests a calibration curve for absorbance versus fluridone concentration was prepared. This curve was utilized in the hard water solution tests.

The release profiles for the fluridone-loaded PCL monolithic fibers in reconstituted hardwater were obtained by the same procedure as those obtained for the ethanolic receiving media. Triplicate samples of each fiber were immersed in separate containers of 25 ml aliquots of reconstituted hardwater at 23°C. The sealed bottles maintained at 23°C were agitated on an Eberbach shaker. The receiving fluid was periodically exchanged and assayed for fluridone by measuring the absorption peak at 236 nm on a Perkin-Elmer 575 spectrophotometer. The concentration of fluridone was then determined from the Beer's Law plot of absorbance versus fluridone concentration.

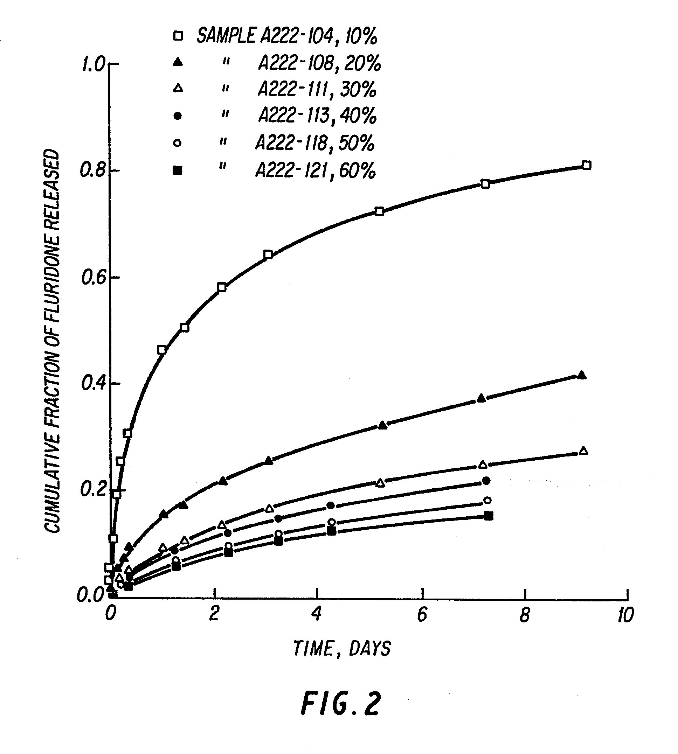

In order to compare the various release rates of the different fluridone-loaded fibers in the aqueous hardwater media, the release of fluridone as the cumulative fraction of total herbicide released from each fiber sample was plotted versus time in days (Figure 2). Similar to the situation with the ethanolic receiving media, the rate of release of fluridone into the aqueous hardwater media increased with decreases in herbicide loading of the fibers. (The fastest release was obtained at the 10% level, while the slowest release was observed at the 60%.) The rates observed correspond to a sustained fluridone release over a fifteen day period for the 10% loaded fiber, while 20% and 30% loaded fibers should have release durations of approximately 25 to 30 days. Furthermore, 40%, 50% and 60% loaded fibers should have a period of release of about 40 days. The data obtained also show that fluridone is released at a faster rate into the ethanolic receiving medium than into the hardwater, as was expected.

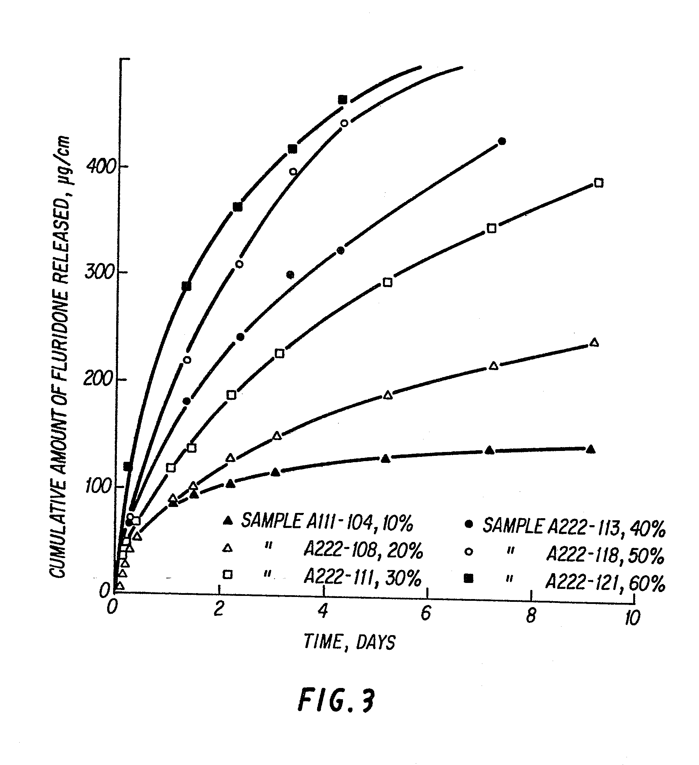

FIGURE 3 shows the cumulative release of fluridone expressed as micrograms of fluridone released per centimeter of fiber versus time in days. This figure shows that although the fractional release rate is lower for the more highly loaded fibers, the actual quantity of fluridone released for the same time interval is higher than with the more loaded fibers. These data indicate that it is possible to formulate systems that will give a variety of release rates and durations of action by changing the herbicide loading of the fiber. Moreover, the total amount of herbicide delivered can be changed by using different lengths or amounts of fiber.

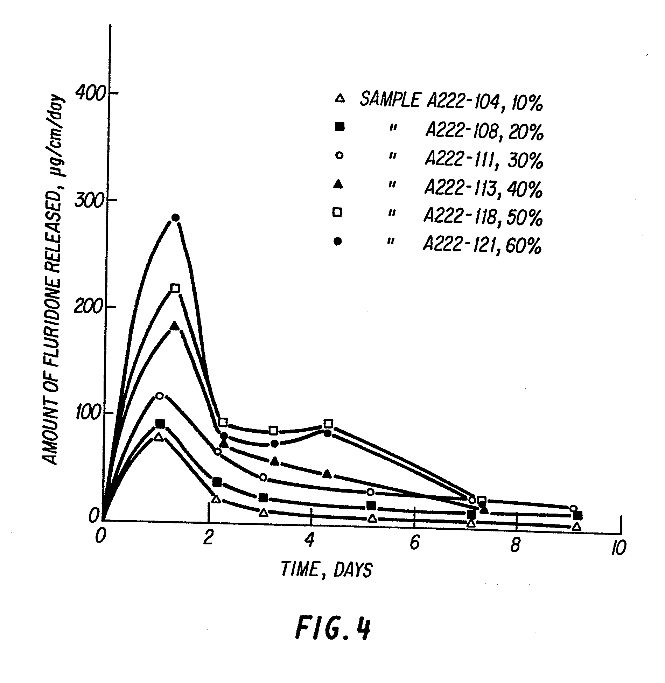

FIGURE 4 shows the release of fluridone in amount released per length of fiber per day versus time in days. As in other monolithic delivery systems, the fibers exhibit an initial burst of release of fluridone the first day and a gradual decrease to a substantially constant rate thereafter.

Minimization of the Burst Effect on Monolithic Delivery Systems

Normally, a zero-order release rate is observed only for reservoir systems in which the herbicide is contained in a polymeric matrix surrounded by a rate-controlling herbicide-free polymer membrane. In the present case, a modification of this system was prepared to approximate this type of release. The modified system consists of fluridone-loaded PCL monolithic fibers coated with an exterior layer of herbicide free PCL. Such fibers were prepared by immersing fluridone-loaded PCL monolithic fibers into a solution of PCL in toluene. The fibers were then pulled through selected orifices to give uniform and controlled coatings of PCL. The solvent was evaporated from the coated fibers, and the immersion procedure was repeated several times to obtain PCL coatings of various thicknesses.

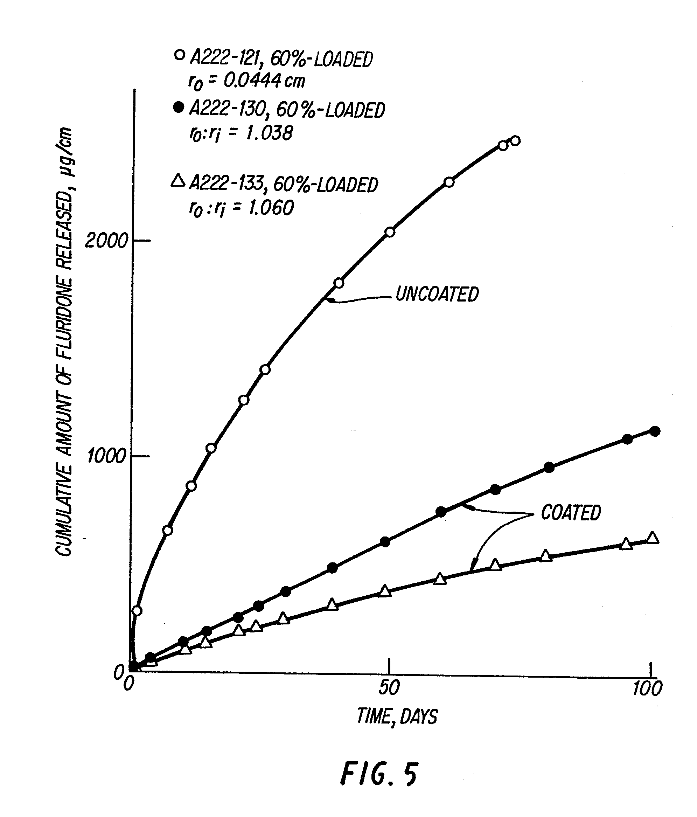

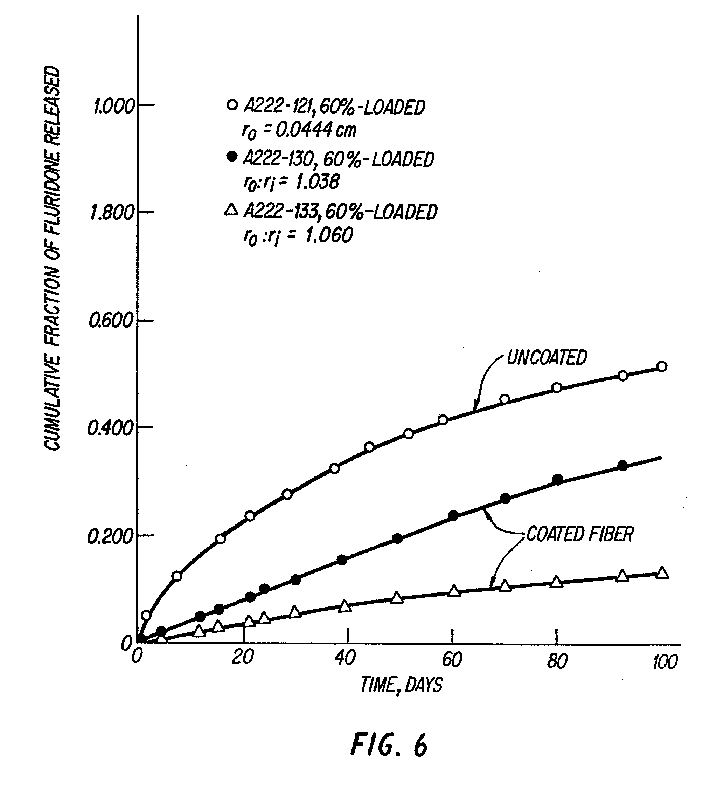

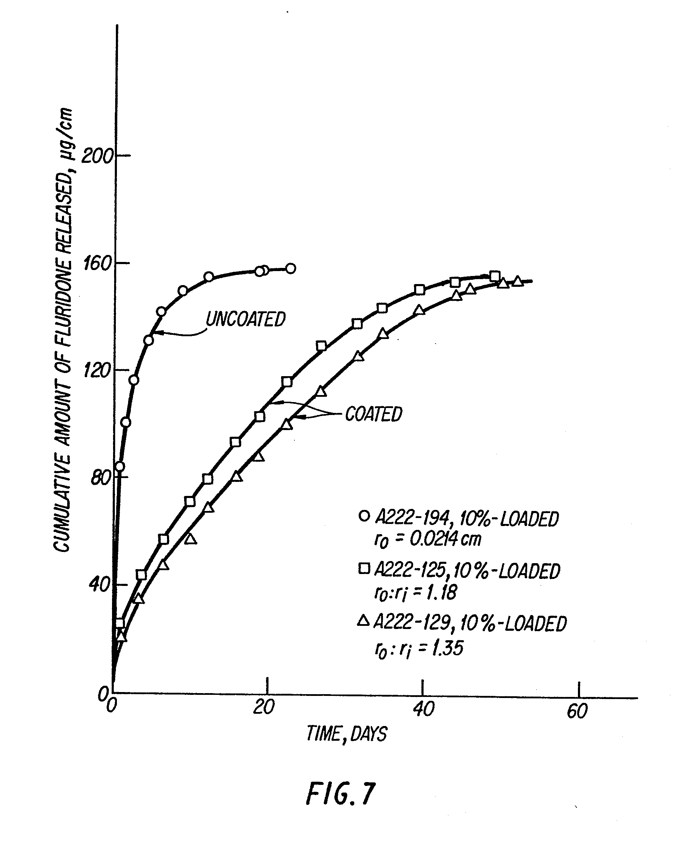

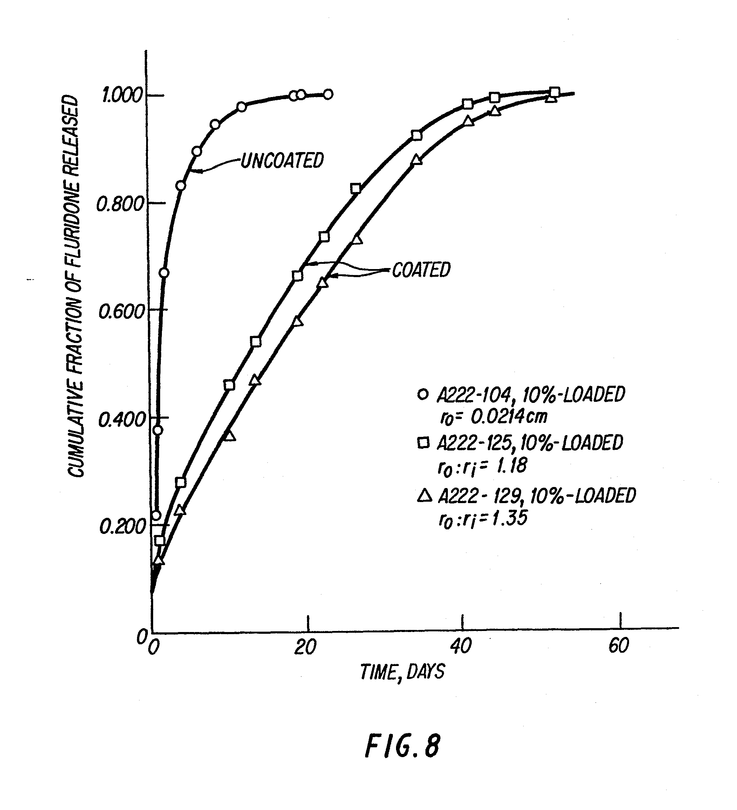

FIGURES 5 to 8 show exemplary release profiles of fluridone from fluridone laden PCL fibers coated with a herbicide free PCL layer into hard water. FIGURE 5 contrasts the cumulative release of fluridone from two fibers, each loaded with 60% fluridone, but with different $r_o$:$r_i$ ratios indicating different thicknesses of the outer PCL layer which is free of herbicidal agent, with a 60% fluridone fiber which is uncoated with a herbicide free PCL layer. The results not only show a slower rate of cumulative release of fluridone for the coated fibers, but also that the rate of release of fluridone is substantially more linear for the coated fibers over the entire tested time period than for the uncoated fiber. FIGURE 6 represents the cumulative fractional release of fluridone from fibers in the same experiment of FIGURE 5. FIGURES 7 and 8 represent the data obtained from the same type of experimentation from which the data for FIGURES 5 and 6 were obtained except that 10% fluridone laden fibers were used instead of 60% fluridone laden fibers. FIGURE 7 shows the cumulative release of fluridone into hard water, while FIGURE 8 shows the cumulative fractional release of fluridone into hard water.

The results of these tests show that the coating of a biologically active agent laden polymer fiber with an active agent free polymer layer can be expected to yield an active agent containing fiber which exhibits a substantially linear rate of release of active agent in an aqueous body, thereby substantially eliminating the burst effect in the release of active agent from many fibers.

Having now fully described this invention, it will be apparent to one of ordinary skill in the art that many changes and modifications can be made thereto without departing from the spirit or scope of the invention as set forth herein.

Claims

1. A controlled release, biologically active agent containing composition for use in an aquatic environment, comprising:

strands of polymeric fiber containing a biologically effective amount of a biologically active agent which is effective for the treatment of plants in an aquatic environment.

2. The composition of Claim 1, wherein said biologically active agent is an aquatic herbicide.

3. The composition of Claim 2, wherein said herbicide is 6,7-dihydrodipyrido[1,2-a:2',1'-c]pyrazidiinium dibromide, 1-methyl-3-phenyl-5[3-trifluromethyl)phenyl]-4(1H)-pyridine, 2,6-dichloroboenzonitrile, 2,4-dichlorophenoxy acetic acid, 7-oxabicyclo[2,2,1]heptane-2,3-dicarboxylic acid, the dimethylamine salt of 2,4-dichlorophenoxyacetic acid, butoxyethyl(2,4-dichlorophenoxy)acetate or 2,3,6-trichlorophenyl acetic acid.

4. The composition of Claim 1, wherein said biologically active agent is an aquatic fungicide.

5. The composition of Claim 4, wherein said fungicide is 5-methyl-1,2,4-triazolo(3,4-b (benzothiazole)).

6. The composition of Claim 1, wherein said biologically active agent is an aquatic pesticide.

7. The composition of Claim 6, wherein said pesticide is 0,0,0',0'-tetramethyl-0,0'-thiodi-p-phenylene phosphorothioate, 0,0'diethyl-0-3,5,6-trichloro-2-pyridylphosphorothioate, 0,0'-dimethyl dithiophosphate of diethyl mercaptosuccinate, 2,2-dichlorovinyl dimethyl phosphate, 0,0-dimethyl-0-[4-(methylthio)-m-tolyl]phosphorothioate, a pyrethin, hexachloroepoxy-octahydro-endo, exo-dimethanonaphthalene, or hexachloroepoxy-octa-hydro-endo, exo-dimethanonaphthalene.

8.  The composition of Claim 1, wherein the polymeric material of said fiber is a biodegradable and biocompatible material selected from the group consisting of polylactic acid, polyglycolic acid, polycaprolactone, hydroxypropylcellulose, chitin, sodium alginate, polyhydroxybutyrate, cellulose acetate and polypivalolactone.

9.  The composition of Claim 1, wherein the biologically active agent containing polymeric fibers have a monolithic structure, thereby exhibiting initial first-order rate of release characteristics.

10.  The composition of Claim 1, wherein the biologically active agent containing polymeric fibers have a coaxial structure, thereby exhibiting an essentially zero order rate of release, comprising a biologically active agent containing core surrounded by a layer of biologically active agent free polymer material.

11.  The composition of Claim 1, wherein the biologically active agent to polymer weight ratio ranges from 5:95 to 90:18.

12. The composition of Claim 11, wherein the active agent to polymer weight ratio ranges from 10:90 to 60:40.

13. A method of treating aquatic plants with a controlled release, biologically active agent containing composition, comprising:

applying to an aquatic environment a polymeric fiber material containing a biologically active agent, said active agent being effective in providing a given biological treatment to aquatic plants.

14. The method of Claim 13, wherein said biologically active agent is a herbicide which controls aquatic plant growth.

15. The method of Claim 13, wherein said herbicide is 6,7-dihydrodipyrido[1,2-a:2',1'-c]pyrazidiinium dibromide, 1-methyl-3-phenyl-5[3-trifluromethyl)phenyl]-4(1H)-pyridine, 2,6-dichloroboenzonitrile, 2,4-dichlorophenoxyacetic acid, 7-oxabicyclo[2,2,1]heptane-2,3-dicarboxylic acid, the dimethylanime salt of 2,4-dichlorophenoxy acetic acid, butoxyethyl (2,4-dichlorophenoxy) acetate or 2,3,6-tricholorophenyl acetic acid.

16. The method of Claim 14, wherein said herbicide containing fibers are applied to control the growth of water hyacinth, water lettuce, alligator weed, Hydrilla, Eurasian watermilfoil, Southern naiad, Blatterwort, Coontail, pond weed, duckweed or eelgrass.

17. The method of Claim 13, wherein said biologically active agent is a fungicide.

18. The method of Claim 17, wherein said fungicide is 5-methyl-1,2,4-triazolo(3,4-b(benzothiazole)).

19. The method of Claim 18, wherein said fungicide is applied to rice patty fields to reduce fungal infestations of rice plants.

20. The method of Claim 13, wherein said biologically active agent containing fibers are applied in an aquatic environment as long strands of fibers or fiber nets which are capable of entangling with the aquatic plants being treated.

21. The method of Claim 13, wherein the biologically active agent containing fibers are applied to a flowing body of water.

22. The method of Claim 13, wherein the biologically active agent containing fibers are applied to an aquatic environment in the form of short chopped fiber lengths.

23. The method of Claim 13, wherein a quantity of said biologically active agent containing fibers is applied to an aquatic environment to provide from 0.1 to 10.0 pounds of active agent per acre.

FIG.1

FIG. 2

FIG.3

FIG.4

FIG. 5

FIG. 6

FIG.7

FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 080 687 (ENVIRONMENTAL CHEMICALS)<br><br>* Claims 1,2,26-34,47-50,61-63,90-94,109-111,134,137,138 * | 1-3,6,7,9,11-15,20,21 | A 01 N 25/10<br>A 01 N 25/34 |
| Y | US-A-3 864 114 (W.E. GREEN)<br><br>* Column 1, line 61 - column 3, line 17; column 4, line 62 - column 5, line 9; column 6, lines 12-29; claims * | 1-3,8-10,13-15,20 | |
| Y | CA-A- 958 912 (R. BLAND et al.)<br>* Page 6, lines 2-32; claims * | 1-3,13-15 | **TECHNICAL FIELDS SEARCHED (Int. Cl. ³)** |
| Y | US-A-3 590 119 (N.F. CARDARELLI)<br><br>* Column 4, lines 32-41; column 6, line 42 - column 7, line 4; column 8, lines 15-29; claims * | 1,6,7,11-13,20-22 | A 01 N |

The present search report has been drawn up for all claims

| Place of search | Date of completion of the search | Examiner |
|---|---|---|
| THE HAGUE | 16-08-1984 | FLETCHER A.S. |